# FASCICULE DE BREVET EUROPEEN

(11) **EP 3 678 879 B1**
(45) Date de publication et mention de la délivrance du brevet: **23.08.2023**
(21) Numéro de dépôt: 18729704.9
(22) Date de dépôt: 14.06.2018
(51) Int. Cl.: B60J 5/10

(54) **MÉCANISME POUR UN COFFRE À DEUX OUVRANTS D'UN VÉHICULE AUTOMOBILE**
MECHANISMUS FÜR EINEN KRAFTFAHRZEUGKOFFERRAUM MIT ZWEI ÖFFNUNGSPANEELEN
MECHANISM FOR A MOTOR VEHICLE TRUNK WITH TWO OPENING PANELS

(30) Priorité: 27.06.2017 FR 1755875
(43) Date de publication de la demande: 15.07.2020
(73) Titulaire: Renault s.a.s, 92100 Boulogne Billancourt (FR)
(72) Inventeur: BEZEAULT, Loic, 78150 Le Chesnay (FR); HEWAK, Gregor, 95490 Vauréal (FR)
(74) Mandataire: Renault Group
(86) Numéro de dépôt international: PCT/EP2018/065885
(87) Numéro de publication internationale: WO 2019/001985

(56) Documents cités:
- WO-A1-2008/065292
- WO-A2-2008/053111
- DE-A1- 10 215 902
- JP-A- 2011 005 965
- US-A1- 2010 264 689

## Description

### Domaine technique de l'invention

La présente invention concerne un mécanisme pour un coffre d'un véhicule automobile. L'invention concerne également un véhicule automobile comprenant un tel mécanisme.

### État de la technique

Le coffre d'un véhicule automobile a pour fonction principale le transport d'une cargaison. Un ouvrant, en position ouverte, permet d'accéder à un volume utile à l'intérieur du véhicule. En position fermée, l'ouvrant protège la cargaison et l'empêche de tomber hors du coffre. Il arrive parfois que le volume de la cargaison ne permette pas de refermer la porte du coffre. Dans un tel cas, un utilisateur du véhicule peut laisser la cargaison dépasser du coffre. Il doit alors s'assurer que la cargaison est correctement maintenue par exemple en utilisant des sangles de maintien. Une telle solution requiert de nombreuses manipulations pour garantir le maintien en sécurité de la cargaison dans le coffre.

Il arrive également que l'ouverture du coffre soit trop étroite pour charger la cargaison dans le coffre ou bien que l'ouvrant soit trop grand ce qui requiert beaucoup de place autour du coffre et l'utilisation de vérins puissants pour le manipuler.

Des exemples de coffres sont divulgués dans les documents US 2010/264689 A1, JP 2011 005965 A et WO 2008/065282 A1.

### Objet de l'invention

Le but de l'invention est de fournir un mécanisme pour un coffre remédiant aux inconvénients ci-dessus et améliorant les mécanismes connus de l'art antérieur. En particulier, l'invention permet de réaliser un mécanisme pour un coffre qui soit polyvalent et facile à manipuler. L'invention se rapporte à un mécanisme pour un coffre d'un véhicule automobile, le mécanisme comprenant une structure de coffre, une ouverture aménagée dans la structure de coffre, un premier ouvrant mobile par rapport à la structure de coffre entre une première position ouverte et une première position fermée et un deuxième ouvrant mobile par rapport à la structure de coffre entre une deuxième position ouverte et une deuxième position fermée, le premier ouvrant et le deuxième ouvrant étant aptes à fermer conjointement l'ouverture, le premier ouvrant étant mobile entre la première position ouverte et la première position fermée quelle que soit la position du deuxième ouvrant, et le deuxième ouvrant étant mobile entre la deuxième position ouverte et la deuxième position fermée quelle que soit la position du premier ouvrant. Le premier ouvrant peut être mobile en rotation autour d'un premier axe entre la première position ouverte et la première position fermée. Le deuxième ouvrant peut être mobile en rotation autour d'un deuxième axe entre la deuxième position ouverte et la deuxième position fermée.

Le premier axe et le deuxième axe peuvent être parallèles entre eux, et notamment parallèles à un axe transversal du véhicule.

Le premier ouvrant est mobile en rotation de la première position ouverte à la première position fermée selon un premier sens de rotation. Le deuxième ouvrant est mobile en rotation de la deuxième position ouverte à la deuxième position fermée selon un deuxième sens de rotation opposé au premier sens de rotation. Le premier ouvrant peut être positionné au dessus du deuxième ouvrant, le premier ouvrant s'ouvrant vers le haut et se fermant vers le bas et le deuxième ouvrant s'ouvrant vers le bas et se fermant vers le haut.

Le premier ouvrant et/ou le deuxième ouvrant peut comprendre au moins un bras d'articulation en forme de col de cygne, voire deux bras d'articulation en forme de col de cygne disposés symétriquement à droite et à gauche du premier ouvrant et/ou du deuxième ouvrant.

Le mécanisme peut comprendre un premier dispositif de verrouillage entre le premier ouvrant et la structure de coffre et un deuxième dispositif de verrouillage entre le deuxième ouvrant et la structure de coffre.

Le premier dispositif de verrouillage peut comprendre au moins un fil de gâche apte à coopérer avec au moins une serrure voire au moins deux fils de gâche aptes à coopérer avec au moins deux serrures. Le deuxième dispositif de verrouillage peut comprendre au moins un fil de gâche apte à coopérer avec au moins une serrure voire au moins deux fils de gâche aptes à coopérer avec au moins deux serrures.

L'au moins un fil de gâche peut être fixé à l'au moins un bras d'articulation et l'au moins une serrure peut être fixée à la structure de coffre.

Le premier ouvrant peut comprendre deux fils de gâche disposés symétriquement à droite et à gauche du premier ouvrant. La structure de coffre peut comprendre deux serrures aptes à coopérer avec les deux fils de gâche du premier ouvrant. Le deuxième ouvrant peut comprendre deux serrures disposées symétriquement à droite et à gauche du deuxième ouvrant. La structure de coffre peut comprendre deux fils de gâche aptes à coopérer avec les deux serrures du deuxième ouvrant.

L'un parmi le premier et le deuxième ouvrant comprend un joint d'étanchéité et l'autre parmi le premier et le deuxième ouvrant comprend une surface d'appui pour le joint d'étanchéité. Le joint d'étanchéité est en contact avec la surface d'appui lorsque le premier ouvrant et le deuxième ouvrant sont en position fermée.

Le premier axe et le deuxième axe peuvent être agencés de sorte à ce que le joint d'étanchéité s'éloigne de la surface d'appui lorsque le premier ouvrant et/ou le deuxième ouvrant est déplacé de sa position fermée à sa position ouverte.

Le joint d'étanchéité peut être en compression entre la surface d'appui et un plan de fixation du joint d'étanchéité lorsque le premier ouvrant et le deuxième ouvrant sont en position fermée, la surface d'appui et/ou le plan de fixation étant d'une part, sensiblement parallèles au premier axe et au deuxième axe, et d'autre part sensiblement parallèles à une bissectrice entre une première tangente et une deuxième tangente, la première tangente étant définie localement comme une tangente de la trajectoire d'un point du joint d'étanchéité au niveau de sa position fermée, la deuxième tangente étant définie localement comme une tangente de la trajectoire d'un point de de la surface d'appui au niveau de sa position fermée.

Le joint d'étanchéité peut être un joint tubulaire s'étendant sensiblement parallèlement à un axe transversal du véhicule.

Le joint d'étanchéité peut être fixé à une doublure du premier ouvrant et la surface d'appui peut être comprise dans une doublure du deuxième ouvrant.

La structure de coffre peut comprendre un joint d'étanchéité annulaire sur un pourtour de l'ouverture, le joint d'étanchéité annulaire étant apte à coopérer avec le premier ouvrant et avec le deuxième ouvrant. L'invention se rapporte également à un véhicule automobile, notamment un véhicule automobile de type berline ou « tricorps » comprenant un coffre et un mécanisme tel que défini précédemment.

### Description sommaire des dessins

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique partielle d'un véhicule automobile équipé d'un mécanisme pour un coffre selon un mode de réalisation de l'invention, le mécanisme étant dans une première configuration.
La figure 2 est une vue schématique partielle du véhicule automobile équipé du mécanisme dans une deuxième configuration.
La figure 3 est une vue schématique partielle du véhicule automobile équipé du mécanisme dans une troisième configuration.
La figure 4 est une vue schématique partielle du véhicule automobile équipé du mécanisme dans une quatrième configuration.
Les figures 5 et 6 sont des schématiques partielles d'un premier ouvrant du mécanisme selon le mode de réalisation de l'invention.
La figure 7 est une vue schématique de deux bras d'articulation selon le mode de réalisation de l'invention.
Les figures 8 et 9 sont des vues schématiques partielles d'un deuxième ouvrant du mécanisme selon le mode de réalisation de l'invention.
La figure 10 est une vue schématique partielle d'un joint d'étanchéité et d'un fil de gâche selon le mode de réalisation de l'invention.
La figure 11 est une vue schématique en coupe du véhicule automobile équipé du mécanisme, le mécanisme étant dans la première configuration.
La figure 12 est une vue schématique en coupe du véhicule automobile équipé du mécanisme, le mécanisme étant dans la deuxième configuration.
La figure 13 est une vue schématique en coupe partielle du premier ouvrant et du deuxième ouvrant.

### Description d'un mode de réalisation de l'invention

Sur l'ensemble des figures et de la description, la gauche et la droite sont définies selon le point de vue d'un conducteur. L'axe X désigne l'axe longitudinal du véhicule. En marche avant et en ligne droite, le véhicule progresse de l'arrière vers l'avant selon une direction parallèle à son axe longitudinal. L'axe X est orienté de l'avant vers l'arrière du véhicule, c'est-à-dire dans le sens de la marche arrière. L'axe Y désigne l'axe transversal du véhicule. L'axe Y est orienté de la gauche vers la droite. L'axe Z désigne l'axe perpendiculaire à l'axe X et à l'axe Y. L'axe Z est un axe vertical lorsque le véhicule repose sur un sol horizontal. L'axe Z est orienté de bas en haut. Les termes « inférieur » et « supérieur » se rapporte à une orientation selon l'axe Z. Les axes X, Y et Z forment un repère orthonormé direct. Sur l'ensemble des figures et de la description, on considère que le véhicule repose sur un sol horizontal.

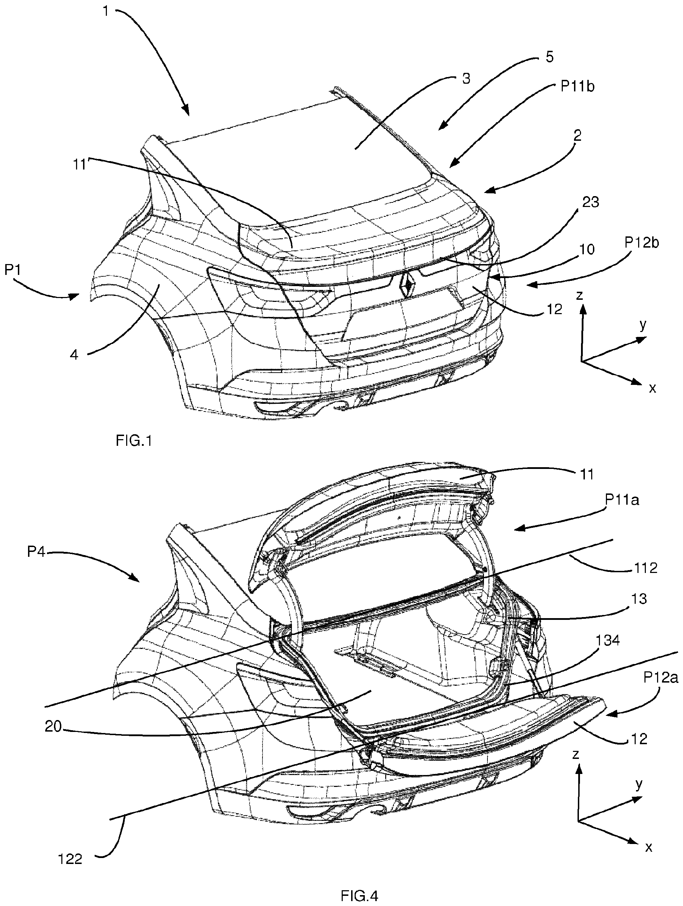

La figure 1 illustre partiellement un véhicule 1 automobile en perspective. On distingue notamment un coffre 2, une lunette arrière 3 et une partie d'une aile arrière 4 gauche. La lunette arrière 3 s'étend selon un plan incliné vers le haut et vers l'avant du véhicule 1. Le véhicule comprend une caisse 5. La caisse 5 comprend un mécanisme 10 pour coffre. Le véhicule 1 est un véhicule de type berline également dénommé « tricorps » ou « sedan ». Ce type de véhicule se caractérise par une silhouette générale en trois parties. Une première partie à l'avant comprend le compartiment moteur, une deuxième partie au milieu comprend un habitacle et enfin une troisième partie à l'arrière comprend le coffre. Ces trois parties peuvent être isolées les unes des autres par des cloisons à l'intérieur du véhicule. La troisième partie comprend un bord supérieur sensiblement horizontal s'étendant d'une extrémité inférieure de la lunette arrière 3 jusqu'à l'arrière du véhicule automobile 1. L'arrière du véhicule automobile 1 s'étend selon un plan sensiblement parallèle à l'axe vertical Z et l'axe transversal Y. En variante, le véhicule 1 pourrait également être tout autre type de véhicule comprenant un coffre à l'arrière. Le véhicule pourrait par exemple être un monospace, un break ou un SUV. La forme de l'arrière du véhicule pourrait s'étendre par exemple sensiblement verticalement jusqu'à un pavillon supérieur sensiblement horizontal.

Le coffre 2 est un compartiment de chargement permettant de transporter une cargaison. Dans un véhicule de type berline, le coffre est généralement séparé de l'habitacle par une cloison limitant un volume de coffre. Une trappe dans la cloison peut permettre de faire communiquer localement l'habitacle avec le volume de coffre. A droite et à gauche, le coffre est délimité par des parois latérales, éventuellement pourvues d'une garniture, le long des ailes arrière 4 du véhicule automobile. Le coffre 2 est délimité en bas par un plancher de coffre et en haut par la lunette arrière et/ou par une plage arrière et/ou par une tablette de coffre. En variante, le coffre peut être délimité en haut par un pavillon et/ou à l'avant par une rangée de sièges. Enfin, le coffre est délimité à l'arrière par le mécanisme 10.

Le mécanisme 10 comprend un premier ouvrant 11 mobile entre une première position ouverte P11a et une première position fermée P11b. Le mécanisme 10 comprend un deuxième ouvrant 12 mobile entre une deuxième position ouverte P12a et une deuxième position fermée P12b. Le mécanisme 10 comprend une ouverture 20 pouvant être séparée en deux parties complémentaires 21, 22. Le premier ouvrant 11 est apte à obturer une première partie 21 de l'ouverture 20 lorsqu'il est fermé, c'est-à-dire dans sa position fermée P11b, autrement dit dans la première position fermée P11b. Le deuxième ouvrant 12 est apte à obturer une deuxième partie 22 de l'ouverture 20, complémentaire de la première partie 21, lorsqu'il est fermé, c'est-à-dire dans sa position fermée P12b, autrement dit dans la première position fermée P12b. Le premier ouvrant 11 et le deuxième ouvrant 12 sont donc aptes à fermer conjointement l'ouverture 20. Lorsque le premier ouvrant 11 est ouvert, c'est-à-dire dans sa position ouverte P11a, autrement dit dans la première position ouverte P11a, le volume de coffre est accessible par la première partie 21 de l'ouverture 20. Lorsque le deuxième ouvrant 12 est ouvert, c'est-à-dire dans sa position ouverte P12a, autrement dit dans la deuxième position ouverte P12a, le volume de coffre est accessible par la deuxième partie 22 de l'ouverture 20. Lorsque le premier et le deuxième ouvrant 11, 12 sont ouverts, le volume de coffre est accessible par la totalité de l'ouverture 20. L'ouverture 20 est d'un seul tenant : elle n'est pas intersectée par un élément du véhicule qui aurait obligé un utilisateur à accéder au volume de coffre d'un coté ou de l'autre de cet élément.

Le premier ouvrant 11 et le deuxième ouvrant 12 peuvent comprendre :
- des éléments de carrosserie formant une peau extérieure de la couleur du véhicule ; et/ou
- une doublure 119, 129 par exemple en tôle ou en plastique, donnant à l'ouvrant une rigidité et une résistance adéquate ; et/ou
- une garniture intérieure masquant la doublure 119, 129 vers l'intérieur du coffre ; et/ou
- des projecteurs arrière ; et/ou
- une poignée apte à leur manipulation.

Dans sa position fermée P11b, le premier ouvrant 11 comprend une première face extérieure 110 s'étendant selon un plan sensiblement longitudinal et transversal. Cette première face extérieure correspond au bord supérieur de la troisième partie du véhicule 1 de type « tricorps ». Le premier ouvrant 11 comprend une deuxième face extérieure 111 s'étendant à l'arrière du véhicule automobile 1 selon un plan sensiblement vertical et transversal. Le premier ouvrant peut être également dénommé « capot ». Dans sa position fermée P12b, le deuxième ouvrant 12 s'étend selon un plan sensiblement vertical et transversal. Le deuxième ouvrant 12 peut être également dénommé « ridelle » ou « abattant ». En variante, les deux ouvrants pourraient avoir une forme différente, par exemple s'étendre tout deux selon un plan transversal et vertical.

Le premier ouvrant 11 est distinct, autrement dit indépendant, du deuxième ouvrant 12. Le deuxième ouvrant 12 ne comprend pas d'élément commun avec le premier ouvrant 11. Le premier ouvrant 11 est également attenant, autrement dit contigu au deuxième ouvrant 12. En d'autres termes, lorsque le premier et le deuxième ouvrant 11, 12 sont fermés, au moins un bord du premier ouvrant 11 est disposé le long d'au moins un bord du deuxième ouvrant 12. De préférence, l'au moins un bord du premier ouvrant est en contact avec l'au moins un bord du deuxième ouvrant. Ainsi, lorsque le premier et le deuxième ouvrant 11, 12 sont fermés, ils se rejoignent le long d'une ligne de contact 23.

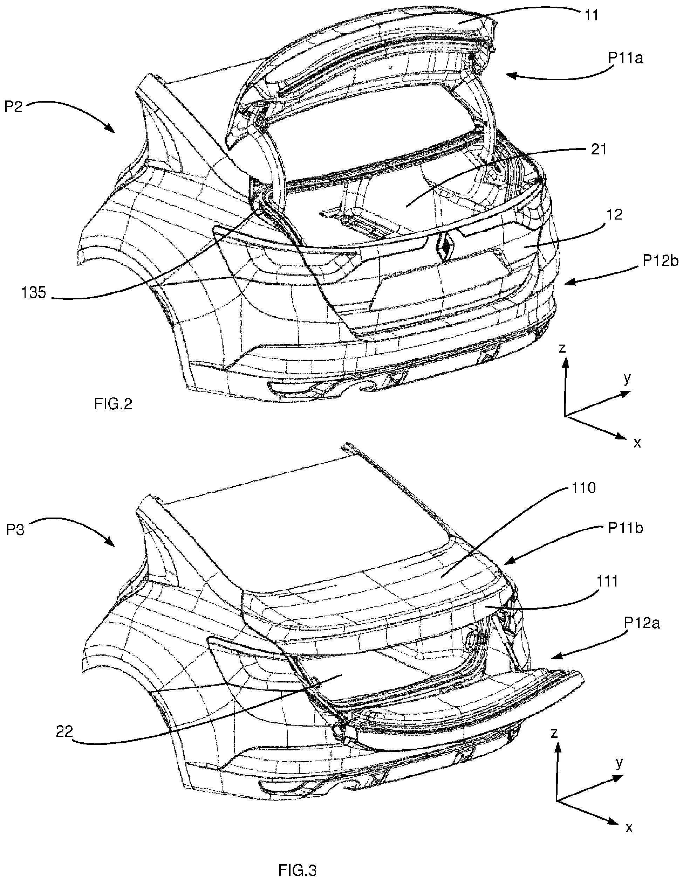

Le premier ouvrant 11 est mobile entre sa position ouverte P11a et sa position fermée P11b quelle que soit la position du deuxième ouvrant 12. De manière égale, le deuxième ouvrant 12 est mobile entre sa position ouverte P12a sa position fermée P12b quelle que soit la position du premier ouvrant 11. Le deuxième ouvrant 12 peut être soit ouvert, soit fermé, soit dans toute position intermédiaire entre sa position ouverte P12a et sa position fermée P12b sans jamais entraver l'ouverture complète ou la fermeture complète du premier ouvrant 11. De manière égale, le premier ouvrant 11 peut être soit ouvert, soit fermé, soit dans toute position intermédiaire entre sa position ouverte P11a et sa position fermée P11b sans jamais entraver l'ouverture complète ou la fermeture complète du deuxième ouvrant 12. Le premier ouvrant 11 peut être actionné réversiblement de sa position ouverte P11a à sa position fermée P11b indépendamment du deuxième ouvrant 12 et vice versa. Ainsi, on peut distinguer quatre configurations P1, P2, P3, P4 différentes pour le mécanisme 10. Une première configuration P1 illustrée sur la figure 1 correspond au premier ouvrant 11 en position fermée P11b et au deuxième ouvrant 12 en position fermée P12b. Une deuxième configuration P2 illustrée sur la figure 2 correspond au premier ouvrant 11 en position ouverte P11a et au deuxième ouvrant 12 en position fermée P12b. Une troisième configuration P3 illustrée sur la figure 3 correspond au premier ouvrant 11 en position fermée P11b et au deuxième ouvrant 12 en position ouverte P12a. Une quatrième configuration P4 illustrée sur la figure 4 correspond au premier ouvrant 11 en position ouverte P11a et au deuxième ouvrant 12 en position ouverte P12a.

Le mécanisme 10 comprend une structure de coffre 13. La structure de coffre 13 encadre l'ouverture 20 du mécanisme 10. La structure de coffre 13 est solidaire de la caisse 5 du véhicule 1 et supporte le premier ouvrant 11 et le deuxième ouvrant 12. La structure de coffre 13 forme également une butée pour le premier ouvrant 11 et le deuxième ouvrant 12 en position fermée. Ainsi, la structure de coffre 13 comprend un châssis ou encore à un chambranle pour le premier et le deuxième ouvrant.

Le mécanisme 10 comprend également :
- un premier dispositif d'articulation entre le premier ouvrant 11 et la structure de coffre 13 ;
- un deuxième dispositif d'articulation entre le deuxième ouvrant 12 et la structure de coffre 13 ;
- un dispositif d'assistance à l'ouverture et/ou à la fermeture du deuxième ouvrant 12 ;
- un premier dispositif de verrouillage entre le premier ouvrant 11 et la structure de coffre 13 ;
- un deuxième dispositif de verrouillage entre le deuxième ouvrant 12 et la structure de coffre 13 ;
- un premier dispositif d'étanchéité entre le premier ouvrant 11 et le deuxième ouvrant 12 ;
- un deuxième dispositif d'étanchéité entre la structure de coffre 13 d'une part et un ensemble formé par le premier et le deuxième ouvrant 11, 12 d'autre part.

Le premier dispositif d'articulation, le deuxième dispositif d'articulation, le dispositif d'assistance, le premier dispositif de verrouillage, le deuxième dispositif de verrouillage, le premier dispositif d'étanchéité et le deuxième dispositif d'étanchéité sont partagés entre le premier ouvrant 11, le deuxième ouvrant 12 et la structure de coffre 13.

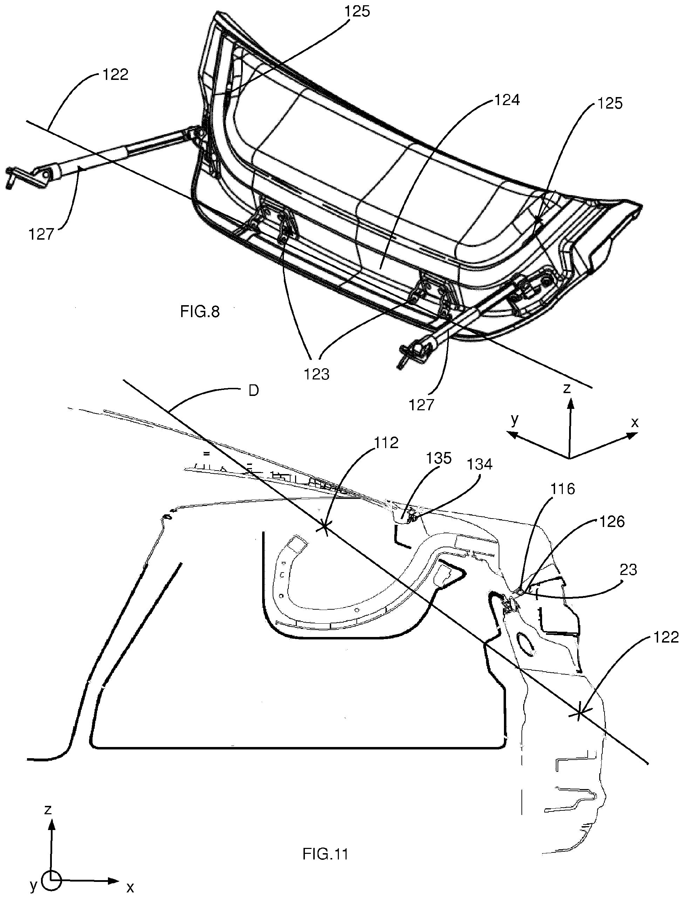

Le premier ouvrant 11 est mobile en rotation autour d'un premier axe 112 par rapport à la structure de coffre 13. Le deuxième ouvrant est mobile en rotation autour d'un deuxième axe 122 par rapport à la structure de coffre 13. Le premier axe 112 et le deuxième axe 122 sont parallèles entre eux, et parallèles à l'axe transversal Y du véhicule automobile 1. La ligne de contact 23 est également sensiblement parallèle à l'axe transversal Y. Ces deux axes 112, 122 sont notamment illustrés sur les figures 4 et 11. Le premier axe 112 est positionné au dessus de la ligne de contact 23 et le deuxième axe 122 est positionné en dessous de la ligne de contact 23. En variante, le premier axe et le deuxième axe pourraient être orientés différemment. Par exemple, le premier axe et le deuxième axe pourraient être parallèles à l'axe vertical Z.

Le premier ouvrant 11 est mobile en rotation de sa position ouverte P11a à sa position fermée P11b selon un premier sens de rotation. Le deuxième ouvrant 12 est mobile en rotation de sa position ouverte P12a à sa position fermée P12b selon un deuxième sens de rotation opposé au premier sens de rotation. Le premier ouvrant 11 est positionné au dessus du deuxième ouvrant 12. Le premier ouvrant s'ouvre vers le haut et se ferme vers le bas contre le deuxième ouvrant. Le deuxième ouvrant 12 s'ouvre vers le bas et se ferme vers le haut contre le premier ouvrant 11. Selon une coupe transversale du mécanisme 10 telle que représentée par exemple sur la figure 11, on peut définir une droite D passant par le premier axe 112 et le deuxième axe 122 et perpendiculaire à ces deux axes. La ligne de contact 23 est positionnée du coté de la droite D vers lequel s'ouvrent le premier ouvrant 11 et le deuxième ouvrant 12.

Comme illustré sur les figures 1 à 4, la position fermée des deux ouvrants se distingue de la position ouverte par une rotation d'environ un quart de tour mais cette amplitude pourrait être différente dans un autre mode de réalisation. Ainsi, en position ouverte P11a, la première face extérieure 110 du premier ouvrant 11 est sensiblement verticale. En position ouverte P12a, le deuxième ouvrant 12 est sensiblement horizontal.

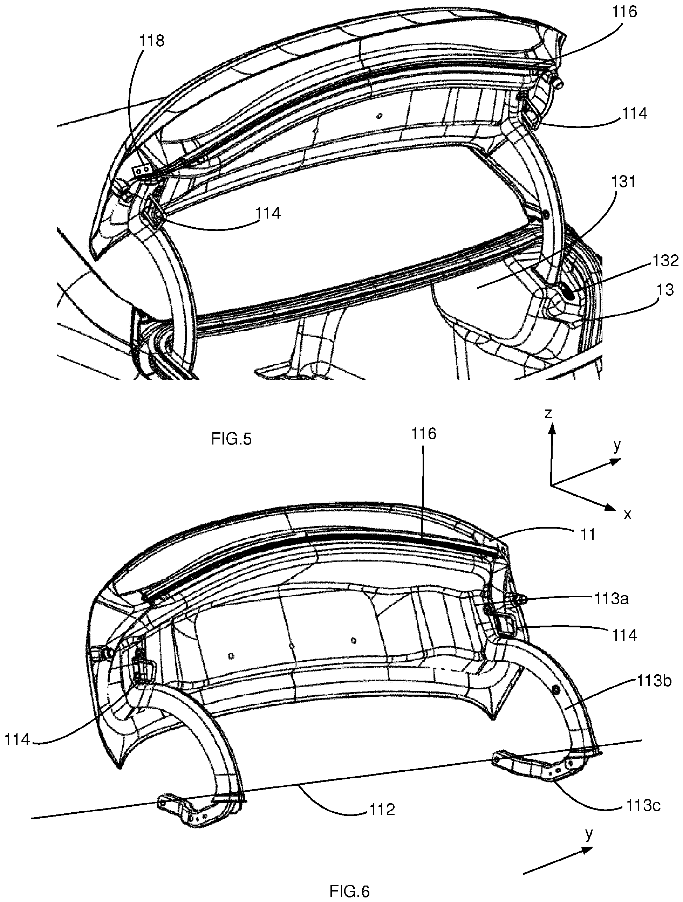

Le premier dispositif d'articulation comprend deux bras d'articulation 113 en forme de col de cygne. Ce dispositif d'articulation est particulièrement visible sur les figures 5, 6 et 7. Chacun des deux bras d'articulation 113 peut être fixé par une liaison pivot à un arbre concentrique au premier axe 112. En variante ou en complément, chacun des deux bras d'articulation 113 peut coopérer avec une glissière courbe intégrée dans un boîtier 131 de la structure de coffre 13.

Les deux bras d'articulation 113 peuvent être disposés symétriquement à droite et à gauche du premier ouvrant 11 et les boîtiers 131 peuvent être disposé le long des parois latérales du coffre. Les deux bras d'articulation 113 peuvent être conçus symétriquement, voire même être identiques. Comme illustré sur la figure 6, chaque bras d'articulation 113 comprend une première partie 113a fixée, par exemple vissé, au premier ouvrant. Les deux bras d'articulation sont fixés à une face intérieure du premier ouvrant 11, c'est-à-dire une face tourne vers l'intérieur du coffre lorsque le premier ouvrant 11 est en position fermée P11b. Chaque bras d'articulation 113 comprend une deuxième partie 113b en forme d'arc de cercle. Cette deuxième partie 113b peut être destinée à être supportée par la glissière courbe intégrée dans chaque boîtier 131. Dans ce cas, la glissière comprend également une forme en arc de cercle sensiblement identique à celle du bras d'articulation 113. Le premier axe de rotation 112 passe par le centre de l'arc de cercle de la deuxième partie 113b de chaque bras d'articulation 113 et par le centre de l'arc de cercle de chaque glissière. Enfin une troisième partie 113c de chaque bras d'articulation 113 peut être destinée à être fixée en liaison pivot avec un arbre concentrique au premier axe 112. A cet effet, la troisième partie 113c de chaque bras d'articulation 113 peut comprendre un trou traversant et orienté transversalement au travers duquel passe l'arbre. Le bras d'articulation 113 droit peut coulisser au travers d'une première ouverture du boîtier 131 droit dont la forme est équivalente à la section de la deuxième partie 113b du bras d'articulation 113 droit. De même, le bras d'articulation gauche peut coulisser au travers d'une première ouverture du boîtier gauche dont la forme est équivalente à la section de la deuxième partie 113b du bras d'articulation 113 gauche. En l'occurrence, la forme de cette première ouverture, à droite comme à gauche, est sensiblement rectangulaire.

Le deuxième dispositif d'articulation, partiellement visible sur la figure 8, comprend deux charnières 123. Les deux charnières 123 peuvent être identiques, positionnées symétriquement à gauche et à droite, espacées d'une longueur quelconque. En variante, ce dispositif d'articulation pourrait comprendre une seule charnière ou trois charnières ou plus. Chaque charnière comprend une partie mobile, c'est-à-dire un battant, fixée sur un coté inférieur 124 du deuxième ouvrant 12. Le côté inférieur 124 peut être une doublure du deuxième ouvrant 12. Chaque charnière comprend également une partie fixe, également dénommé charnier, fixée à un bord inférieur de la structure de coffre 13. Les deux charnières 123 comprennent chacune un axe de rotation confondu avec le deuxième axe 122.

Le premier et le deuxième dispositif d'articulation permettent d'obtenir une ouverture ou une fermeture du premier et du deuxième ouvrant selon une liaison pivot. En variante le mécanisme 10 pourrait comprendre des dispositifs d'articulation tout à fait différents. Par exemple, le premier dispositif d'articulation pourrait comprendre une ou plusieurs charnières et/ou le deuxième dispositif d'articulation pourrait comprendre un ou plusieurs bras d'articulation coopérant avec une ou plusieurs glissières. Ces dispositifs d'articulations pourraient également être motorisés.

Le dispositif d'assistance comprend deux vérins 127 montés symétriquement à droite et à gauche entre le deuxième ouvrant 12 et la structure de coffre 13. Les deux vérins 127 peuvent être symétriques, voire identiques. Chaque vérin 127 comprend deux extrémités. Une première extrémité est fixée à la structure de coffre 13. Une deuxième extrémité est fixée au deuxième ouvrant 12, plus particulièrement sur des bords gauche et droit du deuxième ouvrant 12. Les vérins peuvent comprendre des moyens élastiques pour assister le mouvement d'ouverture et/ou de fermeture du deuxième ouvrant. Les vérins peuvent supporter une partie du poids du deuxième ouvrant pour rendre sa manipulation plus aisée. Ainsi, ces vérins peuvent également être dénommés « équilibreurs » car ils permettent d'équilibrer la force nécessaire pour ouvrir et pour fermer le deuxième ouvrant 12. Les vérins peuvent également servir de butée en position ouverte du deuxième ouvrant. En variante, le premier ouvrant pourrait également être équipé de tels vérins. Le deuxième ouvrant pourrait ne pas comporter de tels vérins. La manipulation du deuxième ouvrant pourrait par exemple ne pas être assistée ou bien être assistée par un moteur électrique. La butée en position ouverte pourrait par exemple être réalisée par une butée du deuxième ouvrant sur la structure du coffre ou par le deuxième dispositif d'articulation.

D'autres types de moyen d'assistance peuvent également être utilisés pour l'ouvrant 12, comme notamment ceux à ressorts ou bien ceux utilisant des barres de torsion.

Le premier dispositif de verrouillage et le deuxième dispositif de verrouillage comprennent chacun au moins un fil de gâche 114, 136 apte à coopérer avec au moins une serrure 132, 125.

Selon le mode de réalisation illustré, le premier dispositif de verrouillage comprend deux fils de gâche 114 fixés à gauche et à droite du premier ouvrant 11. La structure de coffre 13 comprend deux serrures 132 à droite et à gauche aptes à coopérer avec les deux fils de gâche 114. Les deux fils de gâche peuvent être identiques et être disposés symétriquement sur le premier ouvrant 11. Les deux serrures 132 peuvent être identiques et être disposées symétriquement sur la structure de coffre 13. On pourra donc s'attacher à décrire un seul fil de gâche 114 particulier, par exemple le fil de gâche 114 droit, le fil de gâche 114 gauche étant obtenu par symétrie. Le fil de gâche peut être une pièce tubulaire pliée en forme de « U » et fabriquée sur la base d'un fil d'acier. Le fil de gâche 114 droit comprend deux extrémités fixées au premier ouvrant 11. Avantageusement, le fil de gâche 114 droit est fixé sur la première partie 113a du bras d'articulation 113 droit. Lorsque le fil de gâche droit est fixé sur le bras d'articulation 113 droit, il forme un anneau fermé apte être introduit dans la serrure 132 correspondante. La serrure 132 droite est intégrée au boîtier 131 droit. Le boitier 131 droit comprend une deuxième ouverture en forme de fente disposée longitudinalement.

Le fil de gâche 114 droit peut passer au travers de la deuxième ouverture pour coopérer avec la serrure 132 droite. La deuxième ouverture est positionnée dans un voisinage direct de la première ouverture, plus particulièrement derrière la première ouverture. La première ouverture et la deuxième ouverture du boitier 113 droit peuvent communiquer. Le fil de gâche 114 droit étant fixé au bras d'articulation 113 droit, le positionnement du fil de gâche 114 droit est plus précis que si il était fixé en un autre emplacement du premier ouvrant 11. En effet, les tolérances de fabrication du premier ouvrant 11 n'impactent pas la position du fil de gâche 114 droit qui peut dès lors facilement et précisément coopérer avec la serrure 132 droite. En variante, le premier dispositif de verrouillage pourrait comprendre un seul fil de gâche coopérant avec une seule serrure ou un tout autre nombre de fils de gâche coopérant avec un tout autre nombre de serrures. Le ou les fils de gâches pourraient être positionnés en tout autre endroit du premier ouvrant 11, voire même être fixés à la structure de coffre 13 tandis que la ou les serrures correspondantes seraient solidaires du premier ouvrant 11.

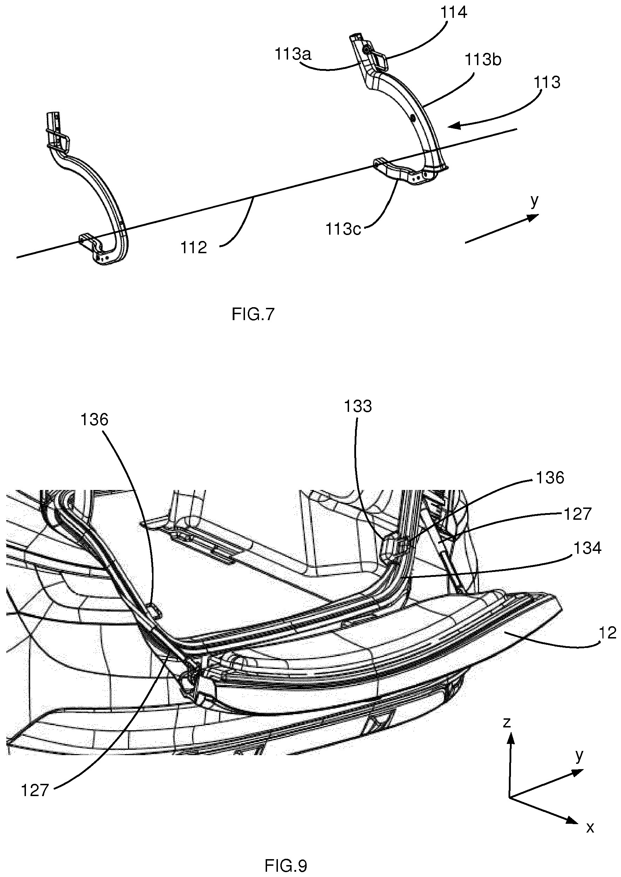

Le deuxième dispositif de verrouillage comprend deux fils de gâche 136 fixés à gauche et à droite de la structure de coffre 13. Le deuxième ouvrant 12 comprend deux serrures 125 à droite et à gauche aptes à coopérer avec les deux fils de gâche 136. Les deux fils de gâche peuvent être de formes identiques entre elles et/ou de forme identique aux fils de gâche du premier dispositif de verrouillage. Les deux fils de gâche peuvent également être disposés symétriquement sur la structure de coffre 13. Les deux serrures 125 peuvent être identiques et être disposées symétriquement sur le deuxième ouvrant 12. Les deux fils de gâche 136 sont fixées chacun sur une protubérance 133 de la structure de coffre 13. Comme particulièrement visible sur la figure 9, les deux protubérances 133 sont positionnées sur des bords latéraux et inférieurs de l'ouverture 20. Les deux fils de gâche sont en forme de « U » dont les extrémités sont fixées aux protubérances 133. Les deux fils de gâches 136 sont agencés chacun selon un plan parallèle à l'axe longitudinal X.

Le premier dispositif d'étanchéité permet de réaliser une liaison étanche entre le premier ouvrant 11 et le deuxième ouvrant 12 lorsqu'ils sont en position fermée. Dans ce but, l'un parmi le premier et le deuxième ouvrant 11, 12 comprend un joint d'étanchéité 116 et l'autre parmi le premier et le deuxième ouvrant comprend une surface d'appui 126 pour le joint d'étanchéité 116. Selon le mode de réalisation illustré le premier ouvrant 11 comprend le joint d'étanchéité 116 et le deuxième ouvrant 12 comprend la surface d'appui 126. Le joint d'étanchéité 116 est en contact avec la surface d'appui 126 le long de la ligne de contact 23 lorsque le premier ouvrant 11 et le deuxième ouvrant 12 sont en position fermée.

La surface d'appui 126 peut être une partie d'une doublure 129 du deuxième ouvrant 12. Notamment, la surface d'appui 126 peut être aménagée dans une feuillure de la doublure 129 du deuxième ouvrant. La section de la surface d'appui 126 selon un plan longitudinal et vertical peut être plate ou bien être bombée pour favoriser la déformation du joint d'étanchéité à son contact.

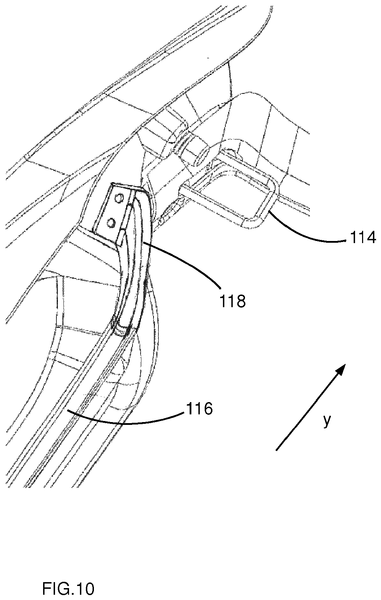

Le joint d'étanchéité 116, particulièrement visible sur les figures 11, 12 et 13 est un joint tubulaire, par exemple en caoutchouc, et comprend une section grossièrement circulaire. Le joint d'étanchéité 116 a donc au moins vaguement la forme d'un cylindre. Le joint d'étanchéité 116 s'étend sensiblement parallèlement à l'axe transversal Y du véhicule automobile. Le joint d'étanchéité 116 est fixé de tout son long à un plan de fixation 117 du premier ouvrant 11. Ce plan de fixation 117 peut faire partie d'une doublure 119 du premier ouvrant 11. Notamment, le plan de fixation 117 peut être aménagé dans une feuillure de la doublure 119 du premier ouvrant. A gauche et à droite, le joint d'étanchéité 116 est fixé au premier ouvrant 11 par un raccord 118 en quart de rond particulièrement visible sur la figure 10. Les raccords 118 à gauche et à droite peuvent être en contact avec la structure de coffre 13 lorsque le premier ouvrant est en position fermée. En variante, le joint d'étanchéité pourrait être de toute autre forme. Par exemple, le joint d'étanchéité pourrait être un joint à lèvre.

Selon une variante de réalisation, le joint 116 peut être fixé à une garniture 119a de coffre formant un habillage intérieur de la doublure 119 du premier ouvrant 11. Il peut aussi être intégré à une garniture, par exemple par une opération de surmoulage. Le joint 116 peut aussi être destiné à venir directement en appui contre une garniture 129a formant un habillage intérieur de la doublure 129 du deuxième ouvrant 12.

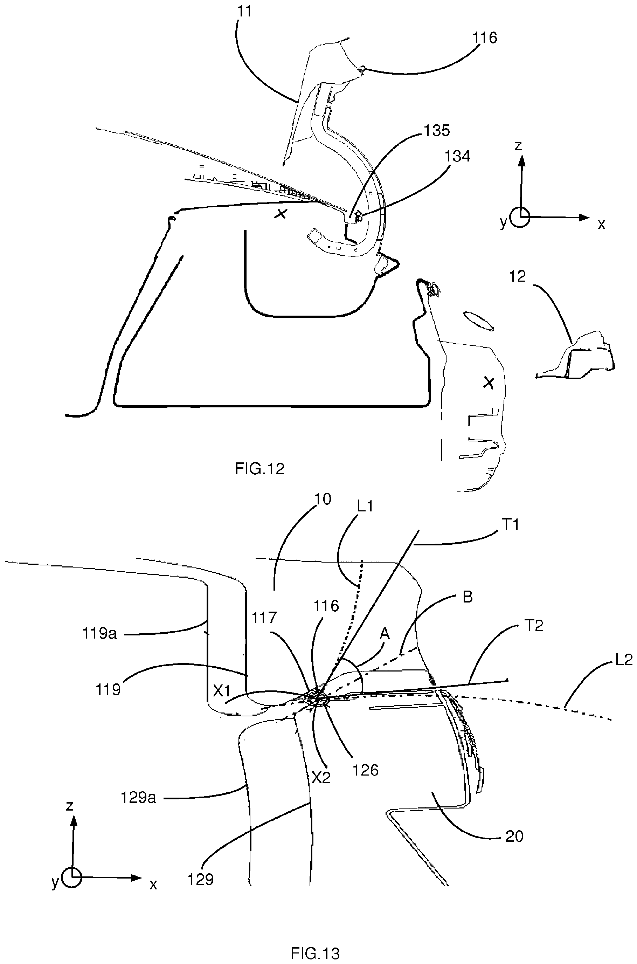

Une trajectoire d'un point X1 du joint d'étanchéité 116 lorsque le premier ouvrant 11 est actionné entre sa position ouverte et sa position fermée est représentée sur la figure 13 par une première ligne L1 en pointillés. Comme le premier ouvrant 11 est en liaison pivot avec la structure de coffre 13, la trajectoire suit un arc de cercle dont le centre est positionné sur le premier axe 112, dans le même plan vertical et longitudinal que le point X1 du joint d'étanchéité 116 considéré. De même, une trajectoire d'un point X2 de la surface d'appui 126, en vis-à-vis du point X1, lorsque le deuxième ouvrant 12 est actionné entre sa position ouverte et sa position fermée est représentée sur la figure 13 par une deuxième ligne L2 en pointillés. Comme le deuxième ouvrant 12 est en liaison pivot avec la structure de coffre 13, la trajectoire suit un arc de cercle dont le centre est positionné sur le deuxième axe 122, dans le même plan vertical et longitudinal que le point X2 de la surface d'appui 126 considéré. Les lignes L1 et L2 se rejoignent en un même point de la ligne de contact 23 lorsque le premier et le deuxième ouvrant sont en position fermée. Autrement dit, le point X1 et le point X2 sont confondus lorsque le premier et le deuxième ouvrant sont en position fermée. Les lignes L1 et L2 divergent lorsque le premier et/ou le deuxième ouvrant s'ouvrent. La trajectoire du joint d'étanchéité 116 est globalement orientée vers le haut et la trajectoire de la surface d'appui 126 est globalement orientée vers l'arrière. Par conséquent, le joint d'étanchéité 116 s'éloigne de la surface d'appui 126 lorsque le premier ouvrant 11 et/ou le deuxième ouvrant 12 est déplacé de sa position fermée à sa position ouverte.

Pour les besoins de la présente description, on définit une première tangente T1 comme la tangente de la trajectoire d'un point du joint d'étanchéité au niveau de sa position fermée. De même, on définit une deuxième tangente T2 comme la tangente de la trajectoire d'un point de la surface d'appui au niveau de sa position fermée. Les deux tangentes T1, T2 forment un angle A compris entre 0 et 180°. Cet angle peut être par exemple de l'ordre de 45° ou de 60°. On définit également une bissectrice B de l'angle A. Par définition, la bissectrice B partage l'angle A en deux parties égales. Selon le mode de réalisation représenté, la bissectrice B est approximativement orientée à 45° vers l'arrière et vers le haut, c'est-à-dire à 45° de l'axe longitudinal X et à 45° de l'axe vertical Z. La bissectrice B est ainsi définit en un point de la ligne de contact 23. D'autres bissectrices peuvent être définies de la même manière aux autres points de la ligne de contact 23.

Lorsque le premier et le deuxième ouvrant sont fermés, le joint d'étanchéité est en compression entre la surface d'appui 126 et le plan de fixation 117. D'une part, la surface d'appui 126 et le plan de fixation 117 sont sensiblement parallèles entre elles. La surface d'appui 126 et le plan de fixation 117 n'étant pas nécessairement plans, on considère que la surface d'appui 126 et le plan de fixation 117 peuvent être subdivisés en zones. Chaque zone de la surface d'appui 126 est sensiblement parallèle à la zone du plan de fixation 117 en vis à vis. La distance séparant la surface d'appui 126 du plan de fixation 117 peut être constante ou quasi constante lorsqu'on parcourt le joint d'étanchéité de manière à produire une compression homogène du joint d'étanchéité.

D'autre part, la surface d'appui 126 et le plan de fixation 117 sont sensiblement parallèles à la bissectrice B. Autrement dit, chaque zone de la surface d'appui 126 et chaque zone du plan de fixation 117 est parallèle à la bissectrice définie dans cette zone. Ainsi, les contraintes de cisaillement s'exerçant sur le joint d'étanchéité 116 sont modérées que l'on ouvre le premier ouvrant (le deuxième ouvrant restant fermé) ou que l'on ouvre le deuxième ouvrant (le premier ouvrant restant fermé). L'ouverture du premier ouvrant 11 provoque une contrainte en cisaillement sur le joint d'étanchéité 116 de même niveau que la contrainte en cisaillement provoquée par l'ouverture du deuxième ouvrant 12. Les performances du joint d'étanchéité 116 sont ainsi optimisées.

Le deuxième dispositif d'étanchéité permet de réaliser une liaison étanche entre la structure de coffre 13 et l'ensemble formé par le premier ouvrant 11 et le deuxième ouvrant 12 lorsqu'ils sont en position fermée. A cet effet, la structure de coffre comprend un joint d'étanchéité 134 annulaire notamment visible sur les figures 4, 9, 11 et 12. Le joint d'étanchéité 134 suit le pourtour de l'ouverture 20. Une partie haute du joint d'étanchéité 134 coopère avec le premier ouvrant, notamment avec des bords latéraux et un bord avant du premier ouvrant. Une partie basse du joint d'étanchéité 134 coopère avec le deuxième ouvrant, notamment avec des bords latéraux et un bord inférieur du deuxième ouvrant. Le joint d'étanchéité 134 peut également être en contact avec les raccords 118 de manière à garantir l'étanchéité de l'interface entre la structure de coffre 13, le premier ouvrant 11 et le deuxième ouvrant 12. Le deuxième dispositif d'étanchéité peut également comprendre une gouttière 135 disposée transversalement à l'interface entre la lunette arrière 3 et le premier ouvrant 11. La gouttière 135 se prolonge latéralement à gauche et à droite pour évacuer l'eau en contrebas du véhicule automobile. De l'eau qui arriverait contre le joint 116 du premier dispositif d'étanchéité peut ruisseler le long de ce joint d'étanchéité 116 et déboucher dans les prolongements latéraux de la gouttière. Le pourtour du joint d'étanchéité 134 est inscrit dans le pourtour de la gouttière 135.

Un utilisateur du véhicule bénéficie avec un tel mécanisme d'une grande flexibilité d'utilisation. Par exemple pour charger rapidement un objet de faible dimension dans le coffre il peut actionner le mécanisme de la première configuration P1 à la deuxième configuration P2. Une seule manipulation est nécessaire pour ouvrir le premier ouvrant puisqu'il n'est pas nécessaire de manipuler le deuxième ouvrant pour ouvrir le premier ouvrant. En configuration P2, l'utilisateur peut également charger un objet particulièrement haut, comme par exemple une plante. Il peut conduire son véhicule en laissant le premier ouvrant ouvert. Ainsi, l'objet reste maintenu dans le coffre grâce au deuxième ouvrant dont la position fermée est verrouillée.

Pour charger un objet particulièrement long ou bien pour bénéficier d'un support sur lequel s'assoir lorsque le véhicule est à l'arrêt, l'utilisateur peut actionner le mécanisme de la première configuration P1 à la troisième configuration P3. Une seule manipulation est nécessaire pour ouvrir le deuxième ouvrant puisqu'il n'est pas nécessaire de manipuler le premier ouvrant pour ouvrir le deuxième ouvrant. L'objet particulièrement long peut dépasser à l'arrière du véhicule automobile tout en étant maintenu par le premier ouvrant dont la position fermée est verrouillée.

Pour charger un objet particulièrement volumineux ou bien pour bénéficier d'un support sur lequel s'assoir lorsque le véhicule est à l'arrêt, l'utilisateur peut actionner le mécanisme de la première, de la deuxième ou de la troisième configuration P1, P2, P3 à la quatrième configuration P4.

Pour refermer le mécanisme de la quatrième configuration P4 à la première configuration P1, l'utilisateur peut indifféremment commencer par refermer le premier ouvrant ou le deuxième ouvrant. En configuration P1, le mécanisme est étanche car le premier et le deuxième dispositif d'étanchéité se complètent et empêchent l'eau de rentrer à l'intérieur du coffre. Le chargement contenu dans le coffre est protégé de l'extérieur car chaque ouvrant dispose d'un dispositif de verrouillage.

## Revendications

1. Mécanisme (10) pour un coffre (2) d'un véhicule (1) automobile, le mécanisme (10) comprenant une structure de coffre (13), une ouverture (20) aménagée dans la structure de coffre (13), un premier ouvrant (11) mobile par rapport à la structure de coffre (13) entre une première position ouverte (P1 1a) et une première position fermée (P11b) et un deuxième ouvrant (12) mobile par rapport à la structure de coffre (13) entre une deuxième position ouverte (P12a) et une deuxième position fermée (P12b), le premier ouvrant (11) et le deuxième ouvrant (12) étant aptes à fermer conjointement l'ouverture (20), **caractérisé en ce que** le premier ouvrant (11) est mobile en rotation de la première position ouverte (P11a) à la première position fermée (P11b) selon un premier sens de rotation, quelle que soit la position du deuxième ouvrant (12), **en ce que** le deuxième ouvrant (12) est mobile en rotation de la deuxième position ouverte (P12a) à la deuxième position fermée (P12b) selon un deuxième sens de rotation opposé au premier sens de rotation, quelle que soit la position du premier ouvrant (11), et **en ce que** l'un parmi le premier et le deuxième ouvrant (11, 12) comprend un joint d'étanchéité (116) et l'autre parmi le premier et le deuxième ouvrant (11, 12) comprend une surface d'appui (126) pour le joint d'étanchéité (116), le joint d'étanchéité (116) étant en contact avec la surface d'appui (126) lorsque le premier ouvrant (11) et le deuxième ouvrant (12) sont en position fermée.

2. Mécanisme (10) selon la revendication précédente, **caractérisé en ce que** le premier ouvrant (11) est mobile en rotation autour d'un premier axe (112) entre la première position ouverte (P11a) et la première position fermée (P11b), et **en ce que** le deuxième ouvrant (12) est mobile en rotation autour d'un deuxième axe (122) entre la deuxième position ouverte (P12a) et la deuxième position fermée (P12b).

3. Mécanisme (10) selon la revendication précédente, **caractérisé en ce que** le premier axe (112) et le deuxième axe (122) sont parallèles entre eux, et notamment parallèles à un axe transversal (Y) du véhicule (1).

4. Mécanisme (10) selon la revendication précédente, **caractérisé en ce que** le premier ouvrant (11) est mobile en rotation de la première position ouverte (P11a) à la première position fermée (P11b) selon un premier sens de rotation, et **en ce que** le deuxième ouvrant (12) est mobile en rotation de la deuxième position ouverte (P12a) à la deuxième position fermée (P12b) selon un deuxième sens de rotation opposé au premier sens de rotation, notamment **en ce que** le premier ouvrant (11) est positionné au dessus du deuxième ouvrant (12), le premier ouvrant (11) s'ouvrant vers le haut et se fermant vers le bas et le deuxième ouvrant (12) s'ouvrant vers le bas et se fermant vers le haut.

5. Mécanisme (10) selon l'une des revendications précédentes, **caractérisé en ce que** le premier ouvrant (11) et/ou le deuxième ouvrant (12) comprend au moins un bras d'articulation (113) en forme de col de cygne, voire deux bras d'articulation (113) en forme de col de cygne disposés symétriquement à droite et à gauche du premier ouvrant (11) et/ou du deuxième ouvrant (12).

6. Mécanisme (10) selon l'une des revendications précédentes, **caractérisé en ce qu'**il comprend un premier dispositif de verrouillage entre le premier ouvrant (11) et la structure de coffre (13) et un deuxième dispositif de verrouillage entre le deuxième ouvrant (12) et la structure de coffre (13).

7. Mécanisme (10) selon la revendication précédente, **caractérisé en ce que** le premier dispositif de verrouillage comprend au moins un fil de gâche (114) apte à coopérer avec au moins une serrure (132) voire comprend au moins deux fils de gâche (114) aptes à coopérer avec au moins deux serrures (132) et/ou **en ce que** le deuxième dispositif de verrouillage comprend au moins un fil de gâche (136) apte à coopérer avec au moins une serrure (125) voire comprend au moins deux fils de gâche (136) aptes à coopérer avec au moins deux serrures (125).

8. Mécanisme (10) selon les revendications 5 et 7 **caractérisé en ce que** l'au moins un fil de gâche (114) est fixé à l'au moins un bras d'articulation (113) et **en ce que** l'au moins une serrure (132) est fixée à la structure de coffre (13).

9. Mécanisme (10) selon l'une des revendications 6 à 8, **caractérisé en ce que** :
- le premier ouvrant (11) comprend deux fils de gâche (114) disposés symétriquement à droite et à gauche du premier ouvrant (11) et **en ce que** la structure de coffre (13) comprend deux serrures (132) aptes à coopérer avec les deux fils de gâche (114) du premier ouvrant (11) ;
et/ou, **en ce que** :
- le deuxième ouvrant comprend deux serrures (125) disposées symétriquement à droite et à gauche du deuxième ouvrant (12) et **en ce que** la structure de coffre (13) comprend deux fils de gâche (136) aptes à coopérer avec les deux serrures (125) du deuxième ouvrant (12).

10. Mécanisme (10) selon la revendication 2, **caractérisé en ce que** le premier axe (112) et le deuxième axe (122) sont agencés de sorte à ce que le joint d'étanchéité (116) s'éloigne de la surface d'appui (126) lorsque le premier ouvrant (11) et/ou le deuxième ouvrant (12) est déplacé de sa position fermée à sa position ouverte.

11. Mécanisme (10) selon la revendication précédente, **caractérisé en ce que** le joint d'étanchéité (116) est en compression entre la surface d'appui (126) et un plan de fixation (117) du joint d'étanchéité (116) lorsque le premier ouvrant (11) et le deuxième ouvrant (12) sont en position fermée, la surface d'appui (126) et/ou le plan de fixation (117) étant d'une part, sensiblement parallèles au premier axe (112) et au deuxième axe (122), et d'autre part sensiblement parallèles à une bissectrice (B) entre une première tangente (T1) et une deuxième tangente (T2), la première tangente (T1) étant définie localement comme une tangente de la trajectoire d'un point (X1) du joint d'étanchéité (116) au niveau de sa position fermée, la deuxième tangente (T2) étant définie localement comme une tangente de la trajectoire d'un point (X2) de de la surface d'appui (126) au niveau de sa position fermée.

12. Mécanisme (10) selon l'une des revendications précédentes, **caractérisé en ce que** le joint d'étanchéité (116) est un joint tubulaire s'étendant sensiblement parallèlement à un axe transversal (Y) du véhicule (1).

13. Mécanisme (10) selon l'une des revendications précédentes, **caractérisé en ce que** le joint d'étanchéité (116) est fixé à une doublure (119) du premier ouvrant (11) et **en ce que** la surface d'appui (126) est comprise dans une doublure (129) du deuxième ouvrant (12).

14. Mécanisme (10) selon l'une des revendications précédentes, **caractérisé en ce que** la structure de coffre (13) comprend un joint d'étanchéité annulaire (134) sur un pourtour de l'ouverture (20), le joint d'étanchéité annulaire (134) étant apte à coopérer avec le premier ouvrant (11) et avec le deuxième ouvrant (12).

15. Véhicule (1) automobile, notamment véhicule (1) automobile de type berline ou « tricorps » comprenant un coffre (2), **caractérisé en ce qu'**il comprend un mécanisme (10) selon l'une des revendications précédentes.

## Patentansprüche

1. Mechanismus (10) für einen Kofferraum (2) eines Kraftfahrzeugs (1), wobei der Mechanismus (10) eine Kofferraumstruktur (13), eine in der Kofferraumstruktur (13) ausgebildete Öffnung (20), einen ersten Flügel (11), der in Bezug auf die Kofferraumstruktur (13) zwischen einer ersten offenen Position (P11a) und einer ersten geschlossenen Position (P11b) beweglich ist, und einen zweiten Flügel (12), der in Bezug auf die Kofferraumstruktur (13) zwischen einer zweiten offenen Position (P12a) und einer zweiten geschlossenen Position (P12b) beweglich ist, umfasst, wobei der erste Flügel (11) und der zweite Flügel (12) dazu geeignet sind, die Öffnung (20) gemeinsam zu schließen, **dadurch gekennzeichnet, dass** der erste Flügel (11) in einer ersten Drehrichtung unabhängig von der Position des zweiten Flügels (12) aus der ersten offenen Position (P11a) in die erste geschlossene Position (P11b) drehbar ist, dass der zweite Flügel (12) in einer zur ersten Drehrichtung entgegengesetzten zweiten Drehrichtung unabhängig von der Position des ersten Flügels (11) aus der zweiten offenen Position (P12a) in die zweite geschlossene Position (P12b) drehbar ist und dass einer des ersten und des zweiten Flügels (11, 12) eine Dichtung (116) umfasst und der andere des ersten und des zweiten Flügels (11, 12) eine Auflagefläche (126) für die Dichtung (116) umfasst, wobei die Dichtung (116) mit der Auflagefläche (126) in Kontakt steht, wenn sich der erste Flügel (11) und der zweite Flügel (12) in der geschlossenen Position befinden.

2. Mechanismus (10) nach dem vorangehenden Anspruch, **dadurch gekennzeichnet, dass** der erste Flügel (11) um eine erste Achse (112) zwischen der ersten offenen Position (P11a) und der ersten geschlossenen Position (P11b) drehbar ist und dass der zweite Flügel (12) um eine zweite Achse (122) zwischen der zweiten offenen Position (P12a) und der zweiten geschlossenen Position (P12b) drehbar ist.

3. Mechanismus (10) nach dem vorangehenden Anspruch, **dadurch gekennzeichnet, dass** die erste Achse (112) und die zweite Achse (122) parallel zueinander und insbesondere parallel zu einer Querachse (Y) des Fahrzeugs (1) sind.

4. Mechanismus (10) nach dem vorangehenden Anspruch, **dadurch gekennzeichnet, dass** der erste Flügel (11) in einer ersten Drehrichtung aus der ersten offenen Position (P11a) in die erste geschlossene Position (P11b) drehbar ist und dass der zweite Flügel (12) in einer zur ersten Drehrichtung entgegengesetzten zweiten Drehrichtung aus der zweiten offenen Position (P12a) in die zweite geschlossene Position (P12b) drehbar ist, insbesondere dass der erste Flügel (11) über dem zweiten Flügel (12) positioniert ist, wobei sich der erste Flügel (11) nach oben öffnet und nach unten schließt und sich der zweite Flügel (12) nach unten öffnet und nach oben schließt.

5. Mechanismus (10) nach einem der vorangehenden Ansprüche, **dadurch gekennzeichnet, dass** der erste Flügel (11) und/oder der zweite Flügel (12) mindestens einen schwanenhalsförmigen Gelenkarm (113) oder sogar zwei schwanenhalsförmige Gelenkarme (113) umfasst, die symmetrisch rechts und links des ersten Flügels (11) und/oder des zweiten Flügels (12) angeordnet sind.

6. Mechanismus (10) nach einem der vorangehenden Ansprüche, **dadurch gekennzeichnet, dass** er eine erste Verriegelungsvorrichtung zwischen dem ersten Flügel (11) und der Kofferraumstruktur (13) und eine zweite Verriegelungsvorrichtung zwischen dem zweiten Flügel (12) und der Kofferraumstruktur (13) umfasst.

7. Mechanismus (10) nach dem vorangehenden Anspruch, **dadurch gekennzeichnet, dass** die erste Verriegelungsvorrichtung mindestens einen Schließdraht (114) umfasst, der dazu geeignet ist, mit mindestens einem Schloss (132) zusammenzuwirken, oder sogar mindestens zwei Schließdrähte (114) umfasst, die dazu geeignet sind, mit mindestens zwei Schlössern (132) zusammenzuwirken, und/oder dass die zweite Verriegelungsvorrichtung mindestens einen Schließdraht (136) umfasst, der dazu geeignet ist, mit mindestens einem Schloss (125) zusammenzuwirken, oder sogar mindestens zwei Schließdrähte (136) umfasst, die dazu geeignet sind, mit mindestens zwei Schlössern (125) zusammenzuwirken.

8. Mechanismus (10) nach Anspruch 5 und 7, **dadurch gekennzeichnet, dass** der mindestens eine Schließdraht (114) an dem mindestens einen Gelenkarm (113) befestigt ist und dass das mindestens eine Schloss (132) an der Kofferraumstruktur (13) befestigt ist.

9. Mechanismus (10) nach einem der Ansprüche 6 bis 8, **dadurch gekennzeichnet, dass**:
- der erste Flügel (11) zwei Schließdrähte (114) umfasst, die symmetrisch rechts und links des ersten Flügels (11) angeordnet sind, und dass die Kofferraumstruktur (13) zwei Schlösser (132) umfasst, die dazu geeignet sind, mit den beiden Schließdrähten (114) des ersten Flügels (11) zusammenzuwirken;
und/oder dadurch, dass:
- der zweite Flügel zwei Schlösser (125) umfasst, die symmetrisch rechts und links des zweiten Flügels (12) angeordnet sind, und dass die Kofferraumstruktur (13) zwei Schließdrähte (136) umfasst, die dazu geeignet sind, mit den beiden Schlössern (125) des zweiten Flügels (12) zusammenzuwirken.

10. Mechanismus (10) nach Anspruch 2, **dadurch gekennzeichnet, dass** die erste Achse (112) und die zweite Achse (122) so angeordnet sind, dass sich die Dichtung (116) von der Auflagefläche (126) entfernt, wenn der erste Flügel (11) und/oder der zweite Flügel (12) aus seiner geschlossenen Position in seine offene Position bewegt wird.

11. Mechanismus (10) nach dem vorangehenden Anspruch, **dadurch gekennzeichnet, dass** die Dichtung (116) zwischen der Auflagefläche (126) und einer Befestigungsebene (117) der Dichtung (116) komprimiert wird, wenn sich der erste Flügel (11) und der zweite Flügel (12) in der geschlossenen Position befinden, wobei die Auflagefläche (126) und/oder die Befestigungsebene (117) einerseits im Wesentlichen parallel zur ersten Achse (112) und zur zweiten Achse (122) sind und andererseits im Wesentlichen parallel zu einer Winkelhalbierenden (B) zwischen einer ersten Tangente (T1) und einer zweiten Tangente (T2) sind, wobei die erste Tangente (T1) lokal als eine Tangente der Bahn eines Punktes (X1) der Dichtung (116) auf Höhe ihrer geschlossenen Position definiert ist, wobei die zweite Tangente (T2) lokal als eine Tangente der Bahn eines Punktes (X2) der Auflagefläche (126) auf Höhe ihrer geschlossenen Position definiert ist.

12. Mechanismus (10) nach einem der vorangehenden Ansprüche, **dadurch gekennzeichnet, dass** die Dichtung (116) eine rohrförmige Dichtung ist, die sich im Wesentlichen parallel zu einer Querachse (Y) des Fahrzeugs (1) erstreckt.

13. Mechanismus (10) nach einem der vorangehenden Ansprüche, **dadurch gekennzeichnet, dass** die Dichtung (116) an einer Auskleidung (119) des ersten Flügels (11) befestigt ist und dass die Auflagefläche (126) in einer Auskleidung (129) des zweiten Flügels (12) enthalten ist.

14. Mechanismus (10) nach einem der vorangehenden Ansprüche, **dadurch gekennzeichnet, dass** die Kofferraumstruktur (13) eine ringförmige Dichtung (134) an einem Umfang der Öffnung (20) umfasst, wobei die ringförmige Dichtung (134) dazu geeignet ist, mit dem ersten Flügel (11) und mit dem zweiten Flügel (12) zusammenzuwirken.

15. Kraftfahrzeug (1), insbesondere Kraftfahrzeug (1) vom Limousinen- oder Stufenhecktyp, umfassend einen Kofferraum (2), **dadurch gekennzeichnet, dass** es einen Mechanismus (10) nach einem der vorangehenden Ansprüche umfasst.

## Claims

1. Mechanism (10) for a trunk (2) of a motor vehicle (1), the mechanism (10) comprising a trunk structure (13), an opening (20) provided in the trunk structure (13), a first opening panel (11) that can move relative to the trunk structure (13) between a first open position (P11a) and a first closed position (P11b) and a second opening panel (12) that can move relative to the trunk structure (13) between a second open position (P12a) and a second closed position (P12b), the first opening panel (11) and the second opening panel (12) being capable of jointly closing the opening (20), **characterized in that** the first opening panel (11) can move in rotation from the first open position (11a) to the first closed position (P11b) in a first direction of rotation regardless of the position of the second opening panel (12), **in that** the second opening panel (12) can move in rotation from the second open position (P12a) to the second closed position (P12b) in a second direction of rotation that is opposite the first direction of rotation regardless of the position of the first opening panel (11), and **in that** one of the first and the second opening panels (11, 12) comprises a seal (116) and the other of the first and the second opening panels (11, 12) comprises a bearing surface (126) for the seal (116), the seal (116) being in contact with the bearing surface (126) when the first opening panel (11) and the second opening panel (12) are in the closed position.

2. Mechanism (10) according to the preceding claim, **characterized in that** the first opening panel (11) can move in rotation about a first axis (112) between the first open position (P11a) and the first closed position (P11b), and **in that** the second opening panel (12) can move in rotation about a second axis (122) between the second open position (P12a) and the second closed position (P12b).

3. Mechanism (10) according to the preceding claim, **characterized in that** the first axis (112) and the second axis (122) are parallel with one another and, notably, parallel to a transverse axis (Y) of the vehicle (1).

4. Mechanism (10) according to the preceding claim, **characterized in that** the first opening panel (11) can move in rotation from the first open position (P11a) to the first closed position (P11b) in a first direction of rotation, and **in that** the second opening panel (12) can move in rotation from the second open position (P12a) to the second closed position (P12b) in a second direction of rotation that is opposite the first direction of rotation, notably **in that** the first opening panel (11) is positioned above the second opening panel (12), the first opening panel (11) opening upward and closing downward and the second opening panel (12) opening downward and closing upward.

5. Mechanism (10) according to one of the preceding claims, **characterized in that** the first opening panel (11) and/or the second opening panel (12) comprises at least one articulation arm (113) in the form of a swan neck, or even two articulation arms (113) in the form of a swan neck, arranged symmetrically to the right and to the left of the first opening panel (11) and/or the second opening panel (12).

6. Mechanism (10) according to one of the preceding claims, **characterized in that** it comprises a first locking device between the first opening panel (11) and the trunk structure (13) and a second locking device between the second opening panel (12) and the trunk structure (13).

7. Mechanism (10) according to the preceding claim, **characterized in that** the first locking device comprises at least one latch wire (114) capable of interacting with at least one lock (132) or even comprises at least two latch wires (114) capable of interacting with at least two locks (132) and/or **in that** the second locking device comprises at least one latch wire (136) capable of interacting with at least one lock (125) or even comprises at least two latch wires (136) capable of interacting with at least two locks (125).

8. Mechanism (10) according to Claims 5 and 7, **characterized in that** the at least one latch wire (114) is fixed to the at least one articulation arm (113) and **in that** the at least one lock (132) is fixed to the trunk structure (13).

9. Mechanism (10) according to one of Claims 6 to 8, **characterized in that**:
- the first opening panel (11) comprises two latch wires (114) arranged symmetrically to the right and to the left of the first opening panel (11) and **in that** the trunk structure (13) comprises two locks (132) capable of interacting with the two latch wires (114) of the first opening panel (11) ;
and/or **in that**:
- the second opening panel comprises two locks (125) arranged symmetrically to the right and to the left of the second opening panel (12) and **in that** the trunk structure (13) comprises two latch wires (136) capable of interacting with the two locks (125) of the second opening panel (12).

10. Mechanism (10) according to Claim 2, **characterized in that** the first axis (112) and the second axis (122) are arranged such that the seal (116) moves away from the bearing surface (126) when the first opening panel (11) and/or the second opening panel (12) is moved from its closed position to its open position.

11. Mechanism (10) according to the preceding claim, **characterized in that** the seal (116) is in compression between the bearing surface (126) and a fixing surface (117) of the seal (116) when the first opening panel (11) and the second opening panel (12) are in the closed position, the bearing surface (126) and/or the fixing surface (117) being, on the one hand, substantially parallel to the first axis (112) and to the second axis (122) and, on the other hand, substantially parallel to a bisecting line (B) between a first tangent (T1) and a second tangent (T2), the first tangent (T1) being defined locally as a tangent of the trajectory of a point (X1) of the seal (116) at the level of its closed position, the second tangent (T2) being defined locally as a tangent of the trajectory of a point (X2) of the bearing surface (126) at the level of its closed position.

12. Mechanism (10) according to one of the preceding claims, **characterized in that** the seal (116) is a tubular gasket extending substantially parallel to a transverse axis (Y) of the vehicle (1).

13. Mechanism (10) according to one of the preceding claims, **characterized in that** the seal (116) is fixed to a liner (119) of the first opening panel (11) and **in that** the bearing surface (126) is included in a liner (129) of the second opening panel (12).

14. Mechanism (10) according to one of the preceding claims, **characterized in that** the trunk structure (13) comprises an annular seal (134) over a periphery of the opening (20), the annular seal (134) being capable of interacting with the first opening panel (11) and with the second opening panel (12) .

15. Motor vehicle (1), notably a sedan- or "notchback"-type motor vehicle (1) comprising a trunk (2), **characterized in that** it comprises a mechanism (10) according to one of the preceding claims.
